# EUROPÄISCHE PATENTSCHRIFT

(11) **EP 1 365 914 B1**
(45) Veröffentlichungstag und Bekanntmachung des Hinweises auf die Patenterteilung: **19.04.2006**
(21) Anmeldenummer: 02700212.0
(22) Anmeldetag: 05.02.2002
(51) Int. Cl.: B32B 27/08, B32B 27/32, G09F 3/10

(54) **ETIKETTIERFOLIE, VERFAHREN ZUR HERSTELLUNG DERSELBEN, SOWIE DEREN VERWENDUNG**
LABELLING FILM, METHOD FOR PRODUCTION AND USE THEREOF
FILM D'ETIQUETAGE, SON PROCEDE DE PRODUCTION ET SON UTILISATION

(30) Priorität: 17.02.2001 DE 10107592
(43) Veröffentlichungstag der Anmeldung: 03.12.2003
(73) Patentinhaber: Nordenia Deutschland Gronau GmbH, 48599 Gronau (DE)
(72) Erfinder: HAMULSKI, Markus, 48599 Gronau (DE)
(74) Vertreter: Albrecht, Rainer Harald
(86) Internationale Anmeldenummer: PCT/EP2002/001147
(87) Internationale Veröffentlichungsnummer: WO 2002/066247

(56) Entgegenhaltungen:
- EP-A- 0 470 486
- WO-A-98/22281
- WO-A-98/52749
- US-A- 5 385 781

## Beschreibung

Die Erfindung betrifft eine Folie zur Herstellung selbstklebender, stanzbarer Etikettierfolien-Laminate.

Bekannt sind mehrschichtige Etikettierfolien (US-A 6 042 907), die zwei ungeschäumte Schichten umfassen und im wesentlichen aus Polyolefin, Polystyrol oder Styrol-Butadien-Styrol-Blockcopolymeren als Kompatibilitätsagens bestehen. Die bekannte Etikettierfolie ist zweischichtig aufgebaut, kann aber weitere Schichten tragen, die bestimmte Funktionen übernehmen. Derartige Etikettierfolien werden als "Blend-Folien" bezeichnet (engl. blend = Mischung). Die besondere Eigenschaft des Polyolefins, nämlich Abriebfestigkeit und Härte, in Kombination mit Steifheit und Maschinenverarbeitbarkeit als hervorstechende Eigenschaften des Polystyrols können so kombiniert werden.

Versuche haben gezeigt, daß eine Mischung aus Polyolefinen und Polystyrol als Schicht zwar Ergebnisse im Sinne des US-Patentes liefert, daß aber diese Ergebnisse zu verbessern sind, und zwar insbesondere im Hinblick auf die Fertigung. Nachteilig ist bei den bekannten Blend-Folien weiterhin, daß die Mischungen immer zu getrübten Folien führen, da Polyolefin-Polystyrol-Blends keinen homogen-kristallinen Aufbau liefern.
Die Aufgabe der vorliegenden Erfindung war es, eine verbesserte Etikettierfolie zur Verfügung zu stellen. Die verbesserte Folie sollte kostengünstiger herzustellen sein, von guter Schneidbarkeit und Stanzbarkeit und auch hinsichtlich ihrer Dehnfähigkeit, Durchstoßfestigkeit der bekannten Folie überlegen sein und bei einer sehr guten Transparenz und hohem Glanz einen hohen Einsatzwert besitzen. Letztlich soll auch die Bedruckbarkeit der Folie gewährleistet sein.

Diese Aufgabe konnte gelöst werden, indem bei einer Folie der eingangs genannten Art, bestehend aus mindestens drei Schichten, die innere Schicht aus Polyolefinen und/oder Olefin-Copolymeren besteht und bei der die auf beiden Seiten der inneren Schicht vorhandenen Schichten aus einer Mischung aus Styrol-Butadien-Styrol-Blockcopolymeren und Polystyrol-Homopolymeren bestehen. Eine Vermischung oder Kompatibilisierung von Polyolefinen und Polystyrol findet nicht statt.

Für das Etikettieren und Auszeichnen von Produkten werden auch andere bekannte selbstklebende Laminate verwendet, die sich aus einem Trägermaterial, druckempfindlichem Klebstoff und einer Abdeckfolie (üblicherweise aus silikonisiertem Papier- oder Kunststoff-Material) zusammensetzen. Als Trägermaterial dient neben Papier auch Polyolefin-Folie. Es werden beispielsweise Polyethylen-Folien in Dicken zwischen 70 bis 150 *µ*m und biaxial orientierte Polyprophylen-Folien in einer Dicke zwischen 50 bis 60 *µ*m eingesetzt. Letztere haben eine hohe spezifische Biegesteifigkeit, die sie auch bei diesen geringen Dicken einsatzfähig machen.

Es ist allerdings festzustellen, daß derartige orientierte Folien eine sehr geringe Dehnfähigkeit und Verformbarkeit haben, welche für das Etikettieren von reliefierten Flächen und sich nach dem Befüllen verformenden Behältern notwendig sind.
Aus der DE 198 59790 A1 ist eine Etikettenverbundfolie für das Etikettieren in der Blasform bekannt. Hiervon unterscheiden sich die im Anspruch 1 beanspruchten Folien von der Gattung hier. Bei den bekannten Etikettenverbundfolien wird beispielsweise eine mehrschichtige Innenlage, die auf eine polyolefinische Aussteifungslage kaschiert ist, genannt, wobei die Innenlage auch mehrschichtig sein kann. Sie kann eine Kernschicht und eine äußere Siegelschicht aus Polystyrol umfassen. Diese Polystyrol-Schicht soll bei 600°C bis 100°C gegen einen Kunststoffbehälter ansiegelbar sein. Vergleichbare Schichten sind bei der vorliegenden Folie nicht aus Polystyrol, sondern aus einem Gemisch von SBS-Blockcopolymeren und Polystyrol-Homopolymeren hergestellt. Es geht hier auch nicht um eine IML-Folie.

In der vorgenannten Aufgabe sind daher auch die bekannten Folien hinsichtlich Dehnfähigkeit und Verformbarkeit zu verbessern. Auch diese Anforderung ist von dem genannten neuen Foliensystem Polystyrol-Polyolefin-Polystyrol gemeistert.

Die Gesamtdicke der Folie liegt im Bereich von 30 bis 100 *µ*m, insbesondere im Bereich von 40 bis 70 *µ*m.

Das Dickenverhältnis der inneren Schicht zu den Dicken der beiden an diese angrenzenden Schichten unterliegt keinen grundlegenden Beschränkungen. Es hat sich jedoch als vorteilhaft herausgestellt, wenn das Verhältnis der Dicke der auf jeder Seite der inneren Schicht vorhandenen Schicht zur Dicke der inneren Schicht 1:1 bis 1:6 beträgt. Besonders bevorzugt ist ein Verhältnis von 1:2 bis 1:4.

Die innere Schicht enthält im wesentlichen Polyolefine und/oder Olefin-Copolymere bzw. besteht im wesentlichen aus diesen. So kann der Kern auch gänzlich aus Polyolefinen und/oder Olefin-Copolymeren bestehen. Als besonders geeignet haben sich Polymere auf Basis von Ethylen und Propylen, sowie deren Mischungen untereinander oder mit anderen Olefinen, wie z. B. Buten erwiesen. Der Einsatz solcher Polyolefine bzw. Olefin-Copolymere führt insbesondere zu einer Verbesserung der Dehnfähigkeit und Durchstoßfestigkeit. Außerdem wird durch die verstärkte Verwendung der Polyolefine bzw. Olefin-Copolymere im Verhältnis zu den SBS-Blockcopolymeren die Wirtschaftlichkeit des Produkts erhöht.

Durch den Einsatz von Mischungen aus Styrol-Butadien-Styrol-Blockcopolymeren mit Polystyrol-Homopolymeren als Außenschichten werden der Etikettierfolie ausreichend gute Eigenschaften und erleichterte Schneid- bzw. Stanzbarkeit verliehen.

Die erfindungsgemäßen Folien können, sofern auf die Transparenz verzichtet wird, auch eingefärbt werden, wie z. B. mit Titandioxid, um z. B. eine weiße Folie zu erhalten. Aufgrund des Aufbaus der Folie ist auch eine gute Bedruckbarkeit gewährleistet. Eine weitere Beschichtung dieser Folien, um deren Bedruckbarkeit zu verbessern, ist ebenfalls möglich. Hierbei kommt z. B. eine Metallisierung, wie z. B. eine Aluminiumbedampfung, eine Beschichtung oder Bedampfung mit anorganischen Materialien wie z. B. SiOₓ oder Al₂O₃, in Frage. Es ist zudem eine Beschichtung durch Plasmapolymerisation oder mit Polyvinylidenchlorid oder organisch anorganischen Hybridpolymeren möglich. Die erfindungsgemäße Folie weist eine Beschichtung mit einem Klebstoff auf, insbesondere einem druckempfindlichen Klebstoff, wie er bekanntermaßen für Etiketten, mit oder ohne Schutzfolie, eingesetzt wird.

Die vorliegende Erfindung stellt auch ein Verfahren zur Herstellung der erfindungsgemäßen Folien zur Verfügung. So wurde herausgefunden, daß eine Coextrusion auf herkömmlichen Extrusionsanlagen, insbesondere Blasfolienextrusionsanlagen und Breitschlitzdüsenextrusionsanlagen, vorteilhaft ist. Insbesondere hat es sich als vorteilhaft erwiesen, die Folien mit hohem Polyethylenanteil in der inneren Schicht durch Blasfolienextrusion herzustellen, während Folien auf Polypropylenbasis vorteilhafterweise auf Breitschlitzdüsenextrusionsanlagen verarbeitet werden.

Insbesondere ist vorteilhaft, daß bei Verwendung einer Etikettierfolie in Form einer Etikettierfolien-Manschette, wie sie insbesondere für runde Behälter und Flaschen üblich ist, bei der die überlappenden Ränder des Etikettierstreifens mit einem Heißkleber oder einem anderen Klebstoff verbunden sind, die Parameter von Klebstoff und SBS-Schicht so einzustellen, daß der Scherspannungskoeffizient des Heißklebers größer ist als der Spannungskoeffizient der verklebten Schichten. Hierdurch wird erreicht, daß die Behälter, insbesondere aus PET, sich dehnen können nach dem Befüllen, ohne daß das Etikett reißt. Diese Möglichkeit bieten reine Polyolefinfolien nicht.

Die nachfolgend aufgeführten Beispiele sollen zur Verdeutlichung der Erfindung dienen (Hinweis: Soweit nicht anders definiert, handelt es sich bei den %-Angaben um Gewichtsprozente).

### Beispiel 1:

Auf einer Blasfolienextrusionsanlage (Düsendurchmesser 315 mm) wird eine Dreischichtfolie coextrudiert. Die innere Schicht besteht aus einem Polyethylen-Copolymer mit Buten, wobei die Dichte des Polyethylens 0,918 bis 0,940 g/cm³ entspricht und der Schmelzindex zwischen 0,7 bis 4 g/10 min. bei 190°C und 2,16 kg liegt. Die beiden an der inneren Schicht angrenzenden Schichten setzen sich aus 10 bis 80 Gew.-% Styrol-Butadien-Styrol-Blockcopolymer und 90 bis 20 Gew.-% Polystyrol zusammen. Zusätzlich wird ein Antistatikum eingesetzt.

Die Gesamtdicke der Folie beträgt 50 µm, wobei die Dicke der beiden äußeren Schichten jeweils 10 µm und die der inneren Schicht 30 µm beträgt.

### Beispiel 2:

Auf einer Coextrusionsbreitschlitzdüsenanlage wird eine Dreischichtfolie coextrudiert. Für die innere Schicht wird ein Polypropylen-Randomcopolymer mit Ethylen eingesetzt (Dichte des Polypropylens beträgt 0.902 g/cm³ und der Schmelzindex beträgt 6 g/10 min. bei 230 °C und 2,16 kg). Die beiden an der inneren Schicht von 36 µm angrenzenden Schichten von 7 µm setzen sich wie in Beispiel 1 beschrieben zusammen. Die Gesamtdicke der Folie beträgt 50 µm.

### Vergleichsbeispiel 1

Auf einer Blasfolienanlage wie in Beispiel 1 wird eine dreischichtige Folie coextrudiert. Die innere Schicht der Folie besteht aus einem Polyethylen hoher Dichte (0,957 g/cm³; Schmelzindex 0,9g/10 min. bei 190°C und 2,16 kg). Die Außenschichten wurden aus einem LD-Polyethylen der Dichte 0,928g/cm³, Schmelzindex 2g/10 min. bei 190°C und 2,16 kg coextrudiert. Die Gesamtdicke der Folie beträgt 50 µm.

### Vergleichsbeispiel 2:

Auf einer Coextrusionsbreitschlitzdüsenanlage wie in Beispiel 2 beschrieben, wird eine Dreischichtfolie coextrudiert. Die innere Schicht der Folie besteht aus einem Propylen-Homopolymer, Dichte 0,910 g/cm³ und einem Schmelzindex von 10g/10 min bei 230°C und 2,16 kg. Die an die innere Schicht angrenzenden Außenschichten werden aus einem Propylen-Randomcopolymer mit Ethylen der Dichte des Polypropylens von 0,902 g/cm³, mit einem Schmelzindex von 6 g/10 min. bei 230°C und 2,16 kg extrudiert. Die Gesamtdicke der Folie beträgt 50 µm.

### Bewertung der Beispiele bzw. der Vergleichsbeispiele

Die Folien der Beispiele 1 und 2, die hervorragende Eigenschaften besitzen und sich insbesondere durch sehr gute optische Eigenschaften und hohe Steifigkeit auszeichnen, wurden zu selbstklebenden Laminaten verarbeitet. Anschließend wurde das Laminat bedruckt, das Etikett ausgestanzt und problemlos automatisch auf flexible Behälter aufgebracht, die aus PET bestanden. Die im Vergleichsbeispiel 1 genannte Folie wurde auf gleiche Weise zu selbstklebendem Laminat verarbeitet. Bereits beim Stanzen von Etiketten traten Probleme auf. Beim automatischen Etikettieren war die Steifigkeit des Materials nicht ausreichend, so daß es zu Störungen der Etikiettiermaschine kam. Die Folie nach Vergleichsbeispiel 2 ließ sich gut zu Laminat verarbeiten und auch ohne Probleme bedrucken. Beim Stanzen traten allerdings sporadisch Probleme auf. Ein automatisches Etikettieren war wegen der mangelhaften Steifigkeit der Folie praktisch nicht möglich.

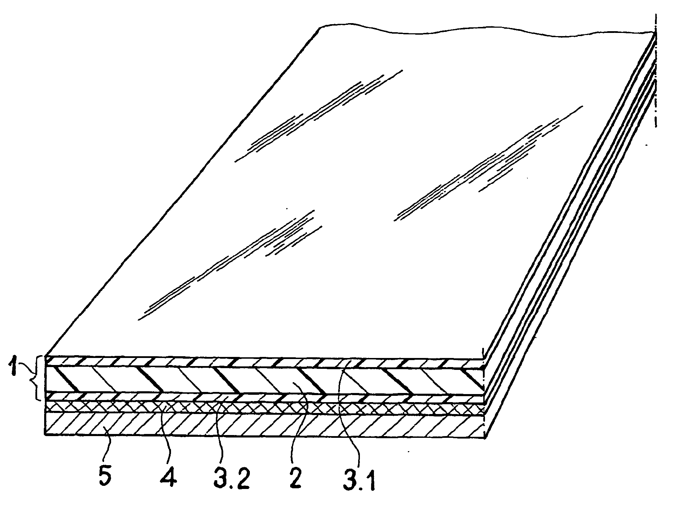

Den typischen Aufbau einer Folie und des mit ihr zustandekommenden Laminates zeigt die Figur.

Bei diesem Ausführungsbeispiel ist auf einen silikonisierten Papierträger 5 mit etwa 58 - 65 µm Dicke eine Klebstoff-Schicht 4 zur Verbindung zu der eigentlichen Folie 1 und zum Klebrigmachen des Etikettes vorgesehen. Die Folie besitzt eine innere Schicht 2, bestehend aus einem Polypropylen-Randomcopolymer mit Ethylen. Die beiden äußeren Schichten 3.1 und 3.2 setzen sich aus 70 Gew.-% Styrol-Butadien-Styrol-Blockcopolymer und 30 Gew.-% Polystyrol zusammen. Das Folienmaterial wird ausgestanzt bis zur Oberseite des Papierträgers, so dass die einzelnen Etiketten als Ausschnitte mit einer Klebstoffschicht versehen ablösbar sind. Sie können dann unmittelbar auf einen Behälter oder dergleichen aufgebracht werden (nicht dargestellt).

## Patentansprüche

1. Selbstklebendes, stanzbares Etikettenfolien-Laminat mit
einem silikonisierten Papierträger,
einer mindestens dreischichtigen, bedruckbaren coextrudierten Folie, die eine Foliendicke von 30 µm bis 100 µm aufweist, und
einer Klebstoffschicht zur Verbindung des Papierträgers mit der Folie und zum Klebrigmachen von Etiketten, die aus der Folie ausstandzbar und mit der Klebstoffschicht versehen von dem Papierträger ablösbar sind,
wobei die coextrudierte Folie eine innere Schicht aus Polyolefinen und/oder Olefin-Copolymeren und auf beiden Seiten der inneren Schicht jeweils eine Schicht aus einer Mischung aus Styrol-Butadien-Styrol(SBS)-Blockcopolymeren und Polystyrol-Homopalymeren aufweist.

2. Etikettenfolien-Laminat nach Anspruch 1, **dadurch gekennzeichnet, dass** die coextrudierte Folie eine Dicke von 40 bis 70 µm besitzt.

3. Etikettenfolien-Laminat nach Anspruch 1 oder 2, **dadurch gekennzeichnet, dass** das Dickenverhältnis der aus einer Mischung aus SBS-Blockcopolymeren und Polystyrol-Homopolymeren bestehenden Schichten zur inneren Schicht der coextrudierten Folie jeweils 1 : 1 bis 1 : 6 beträgt.

4. Etikettenfolien-Laminat nach einem der Ansprüche 1 bis 3, **dadurch gekennzeichnet, dass** die innere Schicht der coextrudierten Folie aus Polyethylen, Polypropylen, einem Polyethylencopolymer oder einem Polypropylen-Copolymer besteht.

5. Etikettenfolien-Laminat nach einem der Ansprüche 1 bis 4, **dadurch gekennzeichnet, dass** die aus einer Mischung aus SBS-Blockcopolymeren und Polystyrol-Homopolymeren bestehende Schicht 10 Gew.-% bis 80 Gew.-% SBS-Blockcopolymere und 90 Gew.-% bis 20 Gew.-% Polystyrol enthält.

6. Etikettenfolien-Laminat nach einem der Ansprüche 1 bis 5, **dadurch gekennzeichnet, dass** die coextrudierte Folie zusätzlich Pigmente enthält.

7. Etikettenfolien-Laminat, **dadurch gekennzeichnet, dass** auf der coextrvdierten Folie mindest eine zusätzliche Schicht aufgebracht ist.

8. Etikettenfolien-Laminat nach Anspruch 7, **dadurch gekennzeichnet, dass** die zusätzliche Schicht durch Bedampfung oder Beschichtung mit Metallen, anorganischen Materialien, Polyvinylidenchlorid oder organisch-anorganischen Hybridpolymeren oder durch Plasmapolymerisation erhalten worden ist.

9. Etikettenfolien-Laminat nach Anspruch 7 oder 8, **dadurch gekennzeichnet, dass** die zusätzliche Schicht mit einer bedruckbar ausgelegten Oberfläche versehen ist.

## Claims

1. Self-adhesive labelling film laminate which can be punched, comprising
a siliconized paper support,
a coextruded film which consists of at least three layers and can be printed on, said film having a thickness of 30 µm to 100 µm, and
an adhesive layer for joining the paper support to the film and for making labels sticky, which labels can be punched out of the film and can be removed from the paper support while still being provided with the adhesive layer,
wherein the coextruded film comprises an inner layer consisting of polyolefins and/or olefin copolymers, and comprises on each side of the inner layer a layer consisting of a blend of styrene-butadiene-styrene (SBS) block copolymers and polystyrene homopolymers.

2. Labelling film laminate according to Claim 1, **characterized in that** the coextruded film has a thickness of 40 to 70 µm.

3. Labelling film laminate according to Claim 1 or 2, **characterized in that** the thickness ratio of the layers consisting of a blend of SBS block copolymers and polystyrene homopolymers to the inner layer of the coextruded film is in each case 1:1 to 1:6.

4. Labelling film laminate according to any of Claims 1 to 3, **characterized in that** the inner layer of the coextruded film consists of polyethylene, polypropylene, a polyethylene copolymer or a polypropylene copolymer.

5. Labelling film laminate according to any of Claims 1 to 4, **characterized in that** the layer consisting of a blend of SBS block copolymers and polystyrene homopolymers contains 10% by weight to 80% by weight of SBS block copolymers and 90% by weight to 20% by weight of polystyrene.

6. Labelling film laminate according to any of Claims 1 to 5, **characterized in that** the coextruded film additionally contains pigments.

7. Labelling film laminate, **characterized in that** at least one additional layer is applied to the coextruded film.

8. Labelling film laminate according to Claim 7, **characterized in that** the additional layer has been obtained by vapour deposition or coating with metals, inorganic materials, polyvinylidene chloride or organic-inorganic hybrid polymers, or by plasma polymerization.

9. Labelling film laminate according to Claim 7 or 8, **characterized in that** the additional layer is provided with a surface designed such that it can be printed on.

## Revendications

1. Film laminé pour étiquettes, estampable, autocollant, comportant
un support papier siliconé,
un film coextrudé imprimable d'au moins trois couches qui présente une épaisseur de film de 30 µm à 100 µm, et
une couche d'adhésif pour relier le support papier au film et pour rendre adhésives des étiquettes qui peuvent être découpées par estampage, à partir du film et qui, pourvues de la couche d'adhésif, peuvent être détachées du support papier,
le film coextrudé comportant une couche interne en polyoléfines et/ou copolymères d'oléfines et sur les deux côtés de la couche interne respectivement une couche d'un mélange de copolymères en blocs de styrène-butadiène-styrène (SBS) et d'homopolymères de polystyrène.

2. Film laminé pour étiquettes selon la revendication 1, **caractérisé en ce que** le film coextrudé possède une épaisseur de 40 à 70 µm.

3. Film laminé pour étiquettes selon la revendication 1 ou 2, **caractérisé en ce que** le rapport d'épaisseur des couches composées d'un mélange de copolymères en blocs de SBS et d'homopolymères de polystyrène sur la couche interne du film coextrudé est de respectivement 1:1 à 1:6.

4. Film laminé pour étiquettes selon l'une des revendications 1 à 3, **caractérisé en ce que** la couche interne du film coextrudé est constituée de polyéthylène, de polypropylène, d'un copolymère de polyéthylène ou d'un copolymère de polypropylène.

5. Film laminé pour étiquettes selon l'une des revendications 1 à 4, **caractérisé en ce que** la couche constituée d'un mélange de copolymères en blocs de SBS et d'homopolymères de polystyrène contient de 10 % en masse à 80 % en masse de copolymères en blocs de SBS et de 90 % en masse à 20 % en masse de polystyrène.

6. Film laminé pour étiquettes selon l'une des revendications 1 à 5, **caractérisé en ce que** le film coextrudé contient en outre des pigments.

7. Film laminé pour étiquettes, **caractérisé en ce que** qu'au moins une couche supplémentaire est appliquée sur le film coextrudé.

8. Film laminé pour étiquettes selon la revendication 7, **caractérisé en ce que** la couche supplémentaire a été obtenue par vaporisation ou déposition de métaux, de matériaux anorganiques, de chlorure de polyvinyle ou de polymères hybrides organiques-anorganiques ou par polymérisation au plasma.

9. Film laminé pour étiquettes selon la revendication 7 ou 8, **caractérisé en ce que** la couche supplémentaire est pourvue d'une surface conçue pour être imprimée.
